(19) Europäisches Patentamt
European Patent Office
Office européen des brevets

(11) **EP 1 981 259 A2**

(12) **EUROPEAN PATENT APPLICATION**

(43) Date of publication:
**15.10.2008 Bulletin 2008/42**

(51) Int Cl.:
***H04N 1/60*** (2006.01)

(21) Application number: **08154341.5**

(22) Date of filing: **10.04.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **12.04.2007 KR 20070035952**

(71) Applicant: **Samsung Electronics Co., Ltd.**
**Suwon-si, Gyeonggi-do 442-742 (KR)**

(72) Inventor: **Hasegawa, Jun**
**Gyeonggi-do (KR)**

(74) Representative: **Waddington, Richard**
**Appleyard Lees**
**15 Clare Road**
**Halifax, Yorkshire HX1 2HY (GB)**

(54) **Image forming apparatus and control method thereof**

(57)     An image forming apparatus includes a printer profile, which is used to convert an XYZ value into a second RGB value, to perform color conversion. The printer profile includes a first color converting module (100) that inverse-converts the XYZ value into an sRGB value, converts the sRGB value into a first RGB, and equivalence-converts the first RGB value into the second RGB value, if the XYZ value has been obtained by performing color conversion for the sRGB value, and a second color converting module (200) that converts the XYZ value into an sRGB value and then converts the sRGB value into the second RGB value, if the XYZ value has been obtained by performing color conversion for a specific color value other than the sRGB value.

FIG. 2

EP 1 981 259 A2

**Description**

BACKGROUND OF THE INVENTION

1. Field of the Invention

The general inventive concept relates to an image forming apparatus and a control method thereof, and more particularly to an image forming apparatus and a control method thereof, capable of improving color reproducibility of the image forming apparatus.

2. Description of the Related Art

Generally, an image forming apparatus prints an image corresponding to input original image data on a recording medium (e.g., a print sheet, etc.). The image forming apparatus includes a printer, a copy machine, or a facsimile.

Hereinafter, an example of a printer of the conventional image forming apparatus will be described for the purpose of convenience.

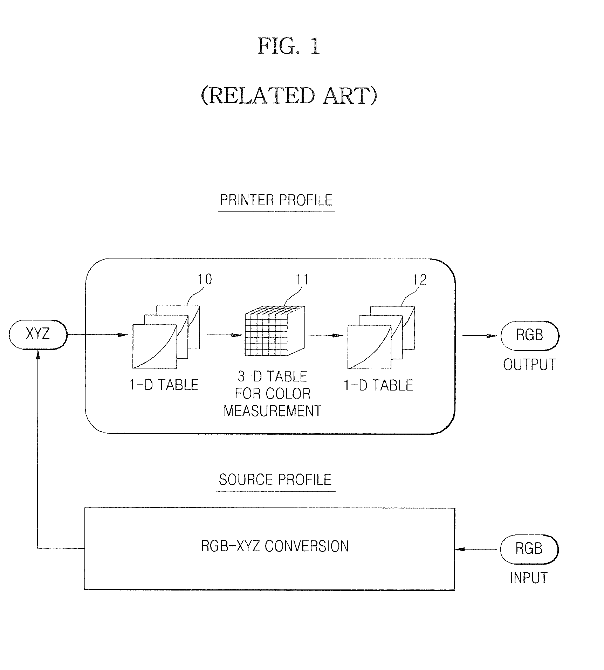

The structure of a conventional image forming apparatus will be described below with reference to FIG. 1. When a color image is printed, color conversion has been performed based on an ICC profile, which is a standard color profile known in the image forming art, that is, a printer profile. The ICC profile is a data file in which the definition of a color space and a printer characteristic are described. The ICC profile is formed based on a conversion table in cooperation with an absolute color space, called a profile connection space (PCS).

CIEXYZ (hereinafter, referred to as "XYZ") and CIELab (hereinafter, referred to as "Lab") color spaces, defined by a commission international d'Eclairage (CIE), are known as representative PCSs.

The PCS for each device is referred to as a device color space.

A printer profile is made by a printer manufacture and provided as annex data of a printer.

FIG. 1 is a view illustrating an internal structure of a conventional printer profile. In the conventional technology, a color output characteristic of a printer is numerically expressed by measuring, using software, colors of a color chart output by the printer, and the color output characteristic is input into a printer data file, thereby creating a printer profile.

An RGB-input printer employs a printer profile, in which RGB is used as a device color space and XYZ is used as the PCS.

The printer profile includes an A2B conversion part and a B2A conversion part, in which the A2B conversion part has the description of the color conversion from the device color space into the PCS, and the B2A conversion part has the description of the conversion from the PCS to the device color space.

The printer profile employing the XYZ as the PCS has a conversion part including an input one-dimension table 10 and a three-dimension table 11, and an output one-dimension table 12.

Hereinafter, the operation of a conventional technology will be described with reference to FIG. 1.

Necessary color conversion is performed based on a printer profile.

For example, when an RGB color space is converted into an XYZ color space, the A2B conversion part is used. Since a printer profile may be obtained based on the color output characteristic of a printer obtained by directly measuring colors of an RGB color chart output by the printer, the printer profile provides XYZ values corresponding to RGB values as data. Accordingly, measured XYZ data are stored with portions of RGB data in the 3-D table, thereby easily describing the A2B conversion part.

In contrast, regarding the conversion from an XYZ color space to an RGB color space (that is, the B2A conversion), proper RGB values have to be allocated to XYZ values, which cannot be obtained from the RGB chart output. In this case, the RGB values are determined by mapping the XYZ values with the nearest RGB values in terms of color measurement. If input XYZ values correspond to output color, the nearest RGB values are allocated based on color measurement data. In any case, the color nearest to the input XYZ values is selected based on actual output colors of a printer.

In the conventional technology, since an XYZ color space provided as the PCS is employed as the printer profile, and the RGB color nearest to an input XYZ color in terms of color measurement is mapped with the input XYZ color in the three-dimensional table 11, and a color different from a desired color may be output from a printer.

For example, when an XYZ color space is converted into an RGB color space, if the XYZ color space is not directly converted from an RGB color space that is of an object to be printed, but is obtained after the RGB color space has been converted into an sRGB color space, XYZ(RGB-sRGB)-RGB conversion must be performed in a printer profile. But instead, XYZ(RGB)-RGB conversion is performed in the printer profile, so that a printer may output colors different from expected colors.

## SUMMARY OF THE INVENTION

The present general inventive concept provides an image forming apparatus and a control method thereof, capable of outputting a color nearest to a desired color in the image forming apparatus, thereby improving color reproducibility of the image forming apparatus.

Additional aspects and utilities of the present general inventive concept will be set forth in part in the description which follows and, in part, will be obvious from the description, or may be learned by practice of the general inventive concept.

According to the present invention there is provided an apparatus and method as set forth in the appended claims. Other features of the invention will be apparent from the dependent claims, and the description which follows.

According to an aspect of the invention there is provided an image forming apparatus including a printer profile to convert an XYZ value into a second RGB value to perform color conversion, wherein the printer profile includes a first color converting module to inverse-convert the XYZ value into an sRGB value, convert the sRGB value into a first RGB, and equivalence-convert the first RGB value into the second RGB value, if the XYZ value has been obtained by performing color conversion for the sRGB value.

The first color converting module may include a 3x3 matrix and a three dimensional look-up table, in which the 3x3 matrix is used to inverse-convert the XYZ value into the sRGB value and then convert the sRGB value into the first RGB, and the three dimensional look-up table is used to convert the first RGB into the second RGB.

The 3x3 matrix may be an inverse matrix of a matrix used to convert the sRGB value into the XYZ value.

The first color converting module may include an input one dimensional table, which is used to gamma-correct the first RGB value converted through the 3x3 matrix; and an output one dimensional table, which is used to perform equivalent-conversion for the first RGB value based on the three dimensional look-up table and then perform an output function.

According to another aspect of the invention there is provided an image forming apparatus including a printer profile to convert an XYZ value into a RGB value to perform color conversion, wherein the printer profile includes a color converting module to convert the XYZ value into an sRGB value and convert the sRGB value into the RGB value, if the XYZ value is obtained by performing color conversion for a specific color value other than the sRGB value.

The color converting module may include a 3x3 matrix, which is used to convert the XYZ value into the sRGB value, and a three dimensional table, which is used to convert the sRGB value into the RGB value.

The color converting module may include an input one dimensional table, which is used to gamma-correct the RGB value converted through the 3x3 matrix; and an output one dimensional table, which is used to perform equivalent-conversion for the RGB value based on the three dimensional look-up table and then perform an output function.

According to another aspect of the invention there is provided an image forming apparatus including a printer profile to convert an XYZ value into a second RGB value to perform color conversion, wherein the printer profile includes a first color converting module to inverse-convert the XYZ value into an sRGB value, convert the sRGB value into a first RGB, and equivalence-convert the first RGB value into the second RGB value, if the XYZ value has been obtained by performing color conversion for the sRGB value, and a second color converting module to convert the XYZ value into an sRGB value and convert the sRGB value into the second RGB value, if the XYZ value has been obtained by performing color conversion for a specific color value other than the sRGB value.

According to another aspect of the invention there is provided a method to control an image forming apparatus performing color conversion by using a printer profile used to convert an XYZ value into a second RGB value the method including inverse-converting the XYZ value into an sRGB value, converting the sRGB value into a first RGB, and then equivalence-converting the first RGB value into the second RGB value, if the XYZ value has been obtained by performing color conversion for the sRGB value, and converting the XYZ value into an sRGB value and then converting the sRGB value into the second RGB value, if the XYZ value has been obtained by performing color conversion for a specific color value other than the sRGB value.

The inverse-converting of the XYZ value into an sRGB value may include inverse-converting the XYZ value using a 3x3 matrix which is an inverse matrix of a matrix used to convert the sRGB value into the XYZ value.

The equivalence-converting the first RGB value into the second RGB value may include using a three-dimensional look-up table to convert the first RGB value into the second RGB.

The converting the XYZ value into an sRGB value and then converting the sRGB value into the second RGB value may include using a 3x3 matrix to convert the XYZ value into the sRGB value, and using a three-dimensional look-up table to convert the sRGB value into the second RGB value.

According to another aspect of the invention there is provided an image forming apparatus to perform color conversion including a source profile to output an XYZ value and to perform one of a RGB-sRGB-XYZ color conversion and a RGB-etc-XYZ color conversion of an input RGB value, where etc represents a color value other than an sRGB value; and a printer profile to perform gamma correction of one of the input RGB value obtained from inverse-conversion of the output XYZ value into an sRGB value which is converted into the input RGB value, and an sRGB value obtained from a conversion of the output XYZ value into the sRGB value.

The image forming apparatus may include a one-dimensional table to perform the gamma correction of an output of a 3x3 conversion matrix.

According to another aspect of the invention there is provided a computer readable recording medium having encoded thereon computer instructions that when executed by a computer perform a method to control an image forming apparatus performing color conversion by using a printer profile, which is used to convert an XYZ value into a second RGB value, the method including inverse-converting the XYZ value into an sRGB value, converting the sRGB value into a first RGB, and then equivalence-converting the first RGB value into the second RGB value, if the XYZ value has been obtained by performing color conversion for the sRGB value; and converting the XYZ value into an sRGB value and then converting the sRGB value into the second RGB value, if the XYZ value has been obtained by performing color conversion for a specific color value other than the sRGB value.

BRIEF DESCRIPTION OF THE DRAWINGS

These and/or other aspects and utilities of the present general inventive concept will become apparent and more readily appreciated from the following description of the embodiments, taken in conjunction with the accompanying drawings of which:

FIG. 1 is a view illustrating the internal structure of a printer profile used in a conventional image forming apparatus;

FIG. 2 is a view illustrating the internal structure of a printer profile used in an image forming apparatus according to an embodiment of the present general inventive concept;

FIG. 3 is a view illustrating the internal structure of a printer profile used in an image forming apparatus according to an embodiment of the present general inventive concept;

FIG. 4 is a flowchart illustrating a process of converting an XYZ color space into an RGB color space in an image forming apparatus according to an embodiment of the present general inventive concept;

FIG. 5 is a flowchart illustrating an example of the color conversion process of FIG. 4; and

FIG. 6 is a flowchart illustrating another example of the color conversion process of FIG. 4.

DETAILED DESCRIPTION OF THE PREFERRED EMBODIMENTS

Reference will now be made in detail to the embodiments of the present general inventive concept, examples of which are illustrated in the accompanying drawings, wherein like reference numerals refer to the like elements throughout. The embodiments are described below to explain the present general inventive concept by referring to the figures.

According to the present general inventive concept, when an XYZ color space is converted into an RGB color space, if the XYZ color space is obtained after an RGB color space has been converted into an sRGB color space based on a source file (RGB-sRGB-XYZ), the XYZ color space is inverse-converted into the sRGB color space, converted into an RGB color space, and then equivalence-converted into an RGB color space. Meanwhile, if the XYZ color space obtained after an RGB color space has been converted into a predetermined color space (etc) other than an sRGB color space based on a source file (RGB-etc-XYZ), the XYZ color space is converted to an sRGB color space and then converted into an RGB color space.

Hereinafter, an XYZ color space having been subject to RGB-sRGB-XYZ conversion based on a source file will be described.

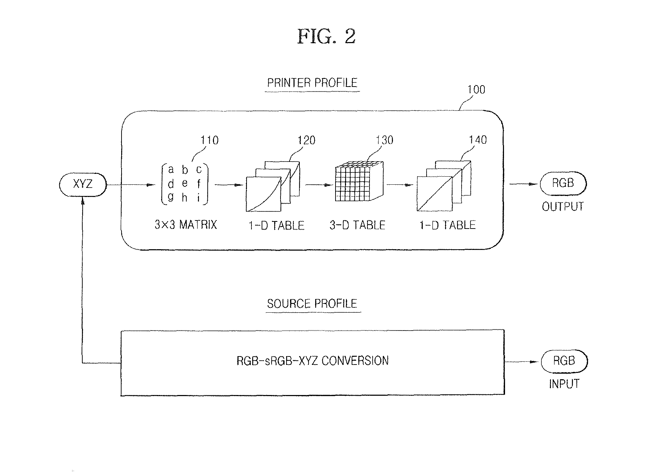

As illustrated in FIG. 2, color conversion is performed by using a printer profile including a first color conversion part 100 according to the present general inventive concept.

The first color conversion part 100 of an embodiment of the printer profile according to the present general inventive concept employs a 3x3 matrix 110 used as a transformation equation of a standard RGB color space, known as an sRGB color space. In more detail, the 3x3 matrix 110 may be expressed as the following Equation 1. This is an inverse matrix of a matrix used in a conversion from sRGB to XYZ based on the definition of an sRGB color space.

## Equation 1

$$\begin{bmatrix} 3.5064 & -1.7400 & -0.5441 \\ -1.0690 & 1.9777 & 0.0352 \\ 0.0563 & -0.1970 & 1.0511 \end{bmatrix}$$

In addition, a one-dimension table 120 employs a gamma curve based on the definition of the sRGB color space. In more detail, a conversion operation may be performed through the following Equation 2. Rin and Rout represent RGB component values normalized in the range of [0.0, 1.0].

## Equation 2

$$R_{out=}\begin{cases} 12.92 \times R_{in} & (R_{in} < 0.00304) \\ 1.055 \times R_{in}^{1.0/2.4} - 0.055 & (R_{in} \geq 0.00304) \end{cases}$$

This represents an inverse conversion of a gamma curve used through the conversion from an RGB color space to an XYZ color space, similarly to the matrix.

Further, a three-dimension table 130 has information about RGB-RGB equivalent conversion.

In addition, an output one-dimension table 140 stores a linear curve to perform the equivalent conversion.

The first color conversion part 100 of the printer profile may be formed as described above, so that information about inverse-conversion of the sRGB color space is contained in the 3x3 matrix 110 of the first color conversion part 100 of the printer profile. Accordingly, color reproducibility can be improved even if an XYZ color space is obtained through RGB-sRGB-XYZ conversion based on a source file.

Hereinafter, an XYZ color space having been subject to RGB-etc-XYZ conversion based on a source file will be described.

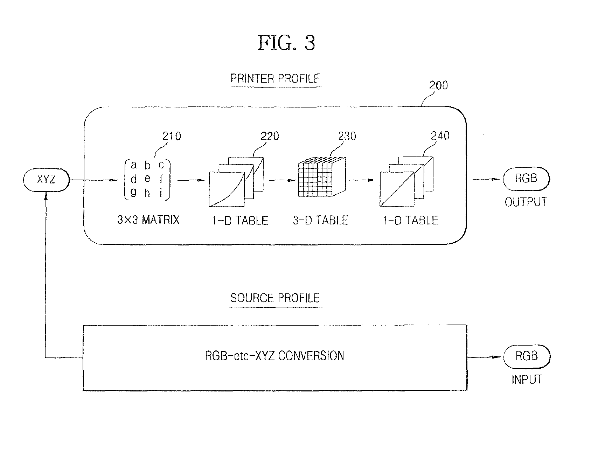

As illustrated in FIG. 3, according to an embodiment of the present general inventive concept, color conversion is performed by using a printer profile including a second color conversion part 200.

The second color conversion part 200 of the printer profile employs a 3x3 matrix 210 to transform an XYZ color space into an sRGB color space.

Further, an input one-dimension table 220 has a gamma curve based on the definition of the sRGB color space.

In addition, a three-dimension table 230 stores a table used for sRGB-RGB conversion.

An output one-dimension table 240 stores a linear curve for equivalent conversion.

The second conversion part 200 of the printer profile may be formed as described above, so that the XYZ color space is converted into the sRGB color space by using the 3x3 matrix 210 and then the sRGB color space is converted into an RGB color space by using the three-dimension table 230. Accordingly, color reproducibility can be improved even if the XYZ color space is obtained through RGB-etc-XYZ conversion based on the source file.

The standard of an ICC profile used as a printer profile allows rendering intents. That is, a variety of color conversion parts can be stored in one printer profile. Even in general applications, color conversion parts are converted based on the rendering intents specified by a user. According to an embodiment of the present general inventive concept, the two different color conversion parts 100 and 200 can be included in one printer profile, thereby improving a user's convenience.

Therefore, a printer profile can be obtained by encoding the above configuration according to the standard of the printer profile and then saving the encoded result as a file.

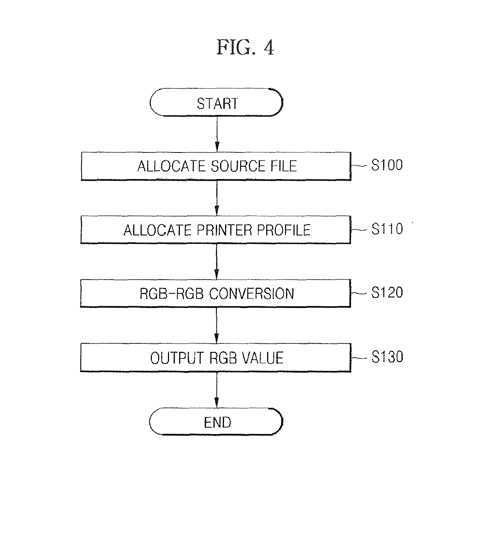

Referring to FIG. 4, regarding color conversion using the printer profile, a source profile is allocated to an RGB color image to be printed (operation S100). In this step, an ICC profile, which is an initial setup of the applications, will be used. In general, an ICC profile of an sRGB color space is widely used as an initial setup of the application.

Thereafter, a printer profile is allocated to an available printer (operation S110). In this step, a printer profile according to the present general inventive concept is used.

If a user executes a print command, the application performs RGB-RGB conversion by using two profiles, that is, the source file and the printer profile (operation S120).

Then, an RGB value is output to the printer (operation S130). The printer having received the RGB value converts the RGB value into a CMYK value so as to perform a printing operation.

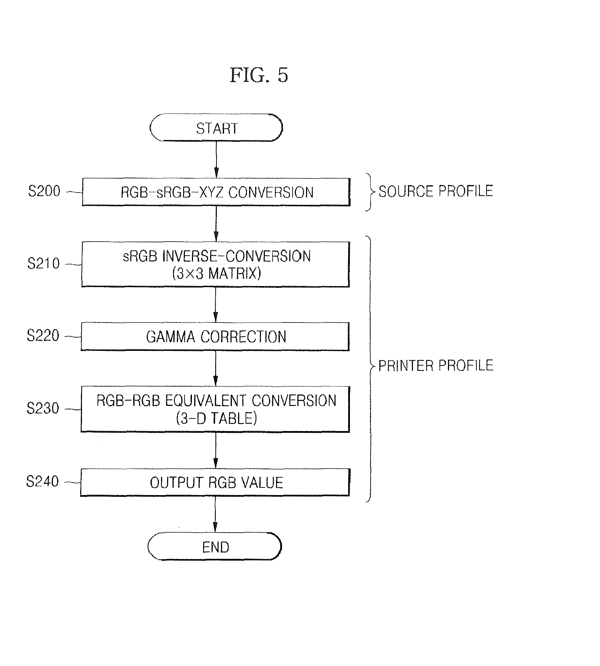

Hereinafter, the color conversion procedure of converting an RGB-sRGB-XYZ color space into an RGB color space will be described with reference to FIG. 5 according to an embodiment of the present general inventive concept.

Referring to FIG. 5, an input RGB value is converted into an sRGB value and then into an XYZ value based on a conversion table in the source profile (operation S200).

Thereafter, the XYZ value is inverse-converted into an sRGB value by using the 3x3 matrix 110 of the first conversion part 100 of the printer profile of FIG. 2 and then converted into an RGB value (operation S210). In this case, since the 3x3 matrix 110 is used for the inverse-conversion of the sRGB value, an original RGB value is reproduced.

Subsequently, gamma correction is performed through the input one-dimension table 120 of FIG. 2 (operation S220).

Thereafter, RGB-RGB equivalent conversion is performed by using the three-dimension table 130 of FIG. 2, so that an RGB value is transferred to the printer (operations S230 and S240).

The printer performs color conversion adjustable for hardware of each printer engine according to the transferred RGB value and then performs a print-out operation in the final stage.

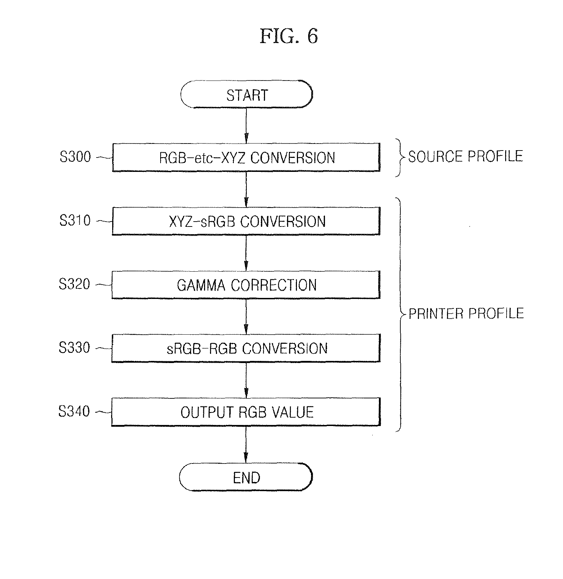

Hereinafter, the color conversion procedure of converting an RGB-etc-XYZ color space into an RGB color space will be described with reference to FIG.6 according to an embodiment of the present general inventive concept.

Referring to FIG. 6, an input RGB value is converted into another color (etc) value other than an sRGB value and then converted into an XYZ value based on a conversion table in the source profile (operation S300).

Thereafter, the XYZ value is converted into an sRGB value by using the 3x3 matrix 210 in the second conversion part 200 of the printer profile of FIG. 3 (operation S31 0). In this case, since the 3x3 matrix 210 is used for the XYZ-sRGB conversion, the XYZ value can be converted into the s-RGB value.

Gamma correction is performed through the input 1-D table 220 of FIG. 3 (operation S320).

Thereafter, sRGB-RGB conversion is performed through the three-dimension table 230 of FIG. 3 so that an RGB value is transferred to the printer (operations S330 and S340).

The printer performs color conversion adjustably for hardware of each printer engine according to the RGB value and then performs a print-out operation in the final stage.

The printer profile according to the present general inventive concept may be used through a color conversion process of an OS (operating system). For example, a color conversion function, called ICM 2.0, has been supported in each OS, after Windows 95, among the Windows series of OS by Microsoft corporation. If the printer profile according to the present general inventive concept is previously allocated to a printer driver, the above color conversion may be performed based on the color conversion function of an OS in a printing operation. The present general inventive concept may include a printer driver, in which the printer profile is automatically registered in the OS during the driver installation, and a function of changing rendering intents is included in the printer driver.

As described above, according to the present general inventive concept, when an XYZ color space is converted into an RGB color space, the XYZ color space is subject to RGB-RGB equivalent conversion after the XYZ color space is inverse-converted into an sRGB color space to convert the XYZ color space into an original RGB color space, if the XYZ color space is an RGB-sRGB-XYZ color space, and the XYZ color space is converted into an sRGB color space and then subjected to an sRGB-RGB conversion process if the XYZ color space is an RGB-etc-XYZ color space, such that a color nearest to a desired color of the image forming apparatus can be output. Accordingly, color reproducibility of the image forming apparatus can be improved.

The present general inventive concept can also be embodied as computer-readable codes on a computer-readable medium. The computer-readable medium can include a computer-readable recording medium and a computer-readable transmission medium. The computer-readable recording medium is any data storage device that can store data which can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network coupled computer systems so that the computer-readable code is stored and executed in a distributed fashion. The computer-readable transmission medium can transmit carrier waves or signals (e.g., wired or wireless data transmission through the Internet). Also, functional programs, codes, and code segments to accomplish the present general inventive concept can be easily construed by programmers skilled in the art to which the present general inventive concept pertains.

Although a few embodiments of the present general inventive concept have been illustrated and described, it would be appreciated by those skilled in the art that changes may be made in these embodiments without departing from the principles of the general inventive concept, the scope of which is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An image forming apparatus, comprising:

   a printer profile to convert an XYZ value into a second RGB value to perform color conversion, wherein the printer profile comprises a first color converting module (100) to inverse-convert the XYZ value into an sRGB value, convert the sRGB value into a first RGB, and equivalence-convert the first RGB value into the second RGB value, if the XYZ value has been obtained by performing color conversion for the sRGB value.

2. The image forming apparatus according to claim 1, wherein the first color converting module (100) comprises a 3x3 matrix (110) and a three dimensional look-up table (130), in which the 3x3 matrix (110) is used to inverse-convert the XYZ value into the sRGB value and then convert the sRGB value into the first RGB, and the three dimensional look-up table (130) is used to convert the first RGB into the second RGB.

3. The image forming apparatus according to in claim 2, wherein the 3x3 matrix (110) is an inverse matrix of a matrix used to convert the sRGB value into the XYZ value.

4. The image forming apparatus according to claim 2, wherein the first color converting module (100) comprises:

   an input one dimensional table (120), which is used to gamma-correct the first RGB value converted through the 3x3 matrix (110); and
   an output one dimensional table (140), which is used to perform equivalent-conversion for the first RGB value based on the three dimensional look-up table (130) and then perform an output function.

5. An image forming apparatus, comprising:

   a printer profile to convert an XYZ value into a RGB value to perform color conversion, wherein the printer profile comprises a color converting module to convert the XYZ value into an sRGB value and convert the sRGB value into the RGB value, if the XYZ value is obtained by performing color conversion for a specific color value other than the sRGB value.

6. The image forming apparatus according to claim 5, wherein the color converting module comprises a 3x3 matrix (110), which is used to convert the XYZ value into the sRGB value, and a three dimensional table, which is used to convert the sRGB value into the RGB value.

7. The image forming apparatus according to claim 6, wherein the color converting module comprises:

   an input one dimensional table (120), which is used to gamma-correct the RGB value converted through the 3x3 matrix (110); and
   an output one dimensional table (140), which is used to perform equivalent-conversion for the RGB value based on the three dimensional look-up table (130) and then perform an output function.

8. An image forming apparatus, comprising:

   a printer profile to convert an XYZ value into a second RGB value to perform color conversion, wherein the printer profile comprises
   a first color converting module (100) to inverse-convert the XYZ value into an sRGB value, convert the sRGB value into a first RGB, and equivalence-convert the first RGB value into the second RGB value, if the XYZ value has been obtained by performing color conversion for the sRGB value; and
a second color converting module (200) to convert the XYZ value into an sRGB value and convert the sRGB value into the second RGB value, if the XYZ value has been obtained by performing color conversion for a specific color value other than the sRGB value.

9. The image forming apparatus according to claim 8, wherein the first color converting module (100) comprises:

a 3x3 matrix (110); and
a three dimensional look-up table (130), in which the 3x3 matrix (110) is used to inverse-convert the XYZ value into the sRGB value and then convert the sRGB value into the first RGB, and the three dimensional look-up table (130) is used to convert the first RGB into the second RGB.

10. The image forming apparatus according to claim 9, wherein the 3x3 matrix (110) is an inverse matrix of a matrix used to convert the sRGB value into the XYZ value.

11. The image forming apparatus according to claim 9 or claim 10, wherein the first color converting module (100) comprises:

an input one dimensional table (120), which is used to gamma-correct the first RGB value converted through the 3x3 matrix (110); and
an output one dimensional table (140), which is used to perform equivalent-conversion for the first RGB value based on the three dimensional look-up table (130) and then perform an output function.

12. The image forming apparatus according to any one of claims 8 to 11, wherein the second color converting module (200) comprises:

a 3x3 matrix (110), which is used to convert the XYZ value into the sRGB value; and
a three dimensional look-up table (130), which is used to convert the sRGB value into the second RGB value.

13. The image forming apparatus according to claim 12, wherein the second color converting module (200) comprises:

an input one dimensional table (120), which is used to gamma-correct the second RGB value converted through the 3x3 matrix (110); and
an output one dimensional table (140), which is used to perform equivalent-conversion for the second RGB value based on the three dimensional look-up table (130) and then perform an output function.

14. A method to control an image forming apparatus performing color conversion by using a printer profile used to convert an XYZ value into a second RGB value, the method comprising:

inverse-converting the XYZ value into an sRGB value, converting the sRGB value into a first RGB, and then equivalence-converting the first RGB value into the second RGB value, if the XYZ value has been obtained by performing color conversion for the sRGB value; and
converting the XYZ value into an sRGB value and then converting the sRGB value into the second RGB value, if the XYZ value has been obtained by performing color conversion for a specific color value other than the sRGB value.

15. The method of claim 14, wherein the inverse-converting of the XYZ value into an sRGB value includes inverse-converting the XYZ value using a 3x3 matrix (110) which is an inverse matrix of a matrix used to convert the sRGB value into the XYZ value.

16. The method of claim 14 or claim 15, wherein the equivalence-converting of the first RGB value into the second RGB value includes using a three-dimensional look-up table to convert the first RGB value into the second RGB.

17. The method of any one of claims 14 to 16, wherein the converting of the XYZ value into an sRGB value and then converting the sRGB value into the second RGB value includes using a 3x3 matrix (110) to convert the XYZ value into the sRGB value, and using a three-dimensional look-up table to convert the sRGB value into the second RGB value.

**18.** An image forming apparatus to perform color conversion, comprising:

a source profile to output an XYZ value and to perform one of a RGB-sRGB-XYZ color conversion and a RGB-etc-XYZ color conversion of an input RGB value, where etc represents a color value other than an sRGB value; and
a printer profile to perform gamma correction of one of the input RGB value obtained from inverse-conversion of the output XYZ value into an sRGB value which is converted into the input RGB value, and an sRGB value obtained from a conversion of the output XYZ value into the sRGB value.

**19.** The image forming apparatus of claim 18, further comprising:

a one-dimensional table (120) to perform the gamma correction of an output of a 3x3 conversion matrix (110).

**20.** A computer readable recording medium having encoded thereon computer instructions that when executed by a computer perform a method to control an image forming apparatus performing color conversion by using a printer profile, which is used to convert an XYZ value into a second RGB value, the method comprising:

inverse-converting the XYZ value into an sRGB value, converting the sRGB value into a first RGB, and then equivalence-converting the first RGB value into the second RGB value, if the XYZ value has been obtained by performing color conversion for the sRGB value; and
converting the XYZ value into an sRGB value and then converting the sRGB value into the second RGB value, if the XYZ value has been obtained by performing color conversion for a specific color value other than the sRGB value.

FIG. 1

(RELATED ART)

PRINTER PROFILE

1-D TABLE    3-D TABLE FOR COLOR MEASUREMENT    1-D TABLE

XYZ   RGB OUTPUT

SOURCE PROFILE

RGB-XYZ CONVERSION   RGB INPUT

FIG. 2

PRINTER PROFILE

100

110          120          130          140

XYZ → $\begin{bmatrix} a & b & c \\ d & e & f \\ g & h & i \end{bmatrix}$ → 1-D TABLE → 3-D TABLE → 1-D TABLE → RGB OUTPUT

3×3 MATRIX    1-D TABLE    3-D TABLE    1-D TABLE

SOURCE PROFILE

RGB-sRGB-XYZ CONVERSION → RGB INPUT

11

## FIG. 3

PRINTER PROFILE

200

210    220    230    240

XYZ → $\begin{bmatrix} a & b & c \\ d & e & f \\ g & h & i \end{bmatrix}$ → [1-D TABLE] → [3-D TABLE] → [1-D TABLE] → RGB OUTPUT

3×3 MATRIX    1-D TABLE    3-D TABLE    1-D TABLE

SOURCE PROFILE

RGB-etc-XYZ CONVERSION    →    RGB INPUT

FIG. 4

```
                  ┌──────────────┐
                  │    START     │
                  └──────┬───────┘
                         │
                         ▼
        ┌────────────────────────────────┐
        │     ALLOCATE SOURCE FILE        │─── S100
        └────────────────┬───────────────┘
                         │
                         ▼
        ┌────────────────────────────────┐
        │    ALLOCATE PRINTER PROFILE     │─── S110
        └────────────────┬───────────────┘
                         │
                         ▼
        ┌────────────────────────────────┐
        │       RGB-RGB CONVERSION        │─── S120
        └────────────────┬───────────────┘
                         │
                         ▼
        ┌────────────────────────────────┐
        │       OUTPUT RGB VALUE          │─── S130
        └────────────────┬───────────────┘
                         │
                         ▼
                  ┌──────────────┐
                  │     END      │
                  └──────────────┘
```

FIG. 5

```
                    ┌──────────────┐
                    │    START     │
                    └──────────────┘
                           │
                           ▼
S200 ──┤  ┌────────────────────────────────┐  ⎫
          │   RGB-sRGB-XYZ CONVERSION      │  ⎬ SOURCE PROFILE
          └────────────────────────────────┘  ⎭
                           │
                           ▼
S210 ──┤  ┌────────────────────────────────┐  ⎫
          │   sRGB INVERSE-CONVERSION      │  │
          │        (3×3 MATRIX)            │  │
          └────────────────────────────────┘  │
                           │                   │
                           ▼                   │
S220 ──┤  ┌────────────────────────────────┐  │
          │     GAMMA CORRECTION           │  │
          └────────────────────────────────┘  ⎬ PRINTER PROFILE
                           │                   │
                           ▼                   │
S230 ──┤  ┌────────────────────────────────┐  │
          │ RGB-RGB EQUIVALENT CONVERSION  │  │
          │        (3-D TABLE)             │  │
          └────────────────────────────────┘  │
                           │                   │
                           ▼                   │
S240 ──┤  ┌────────────────────────────────┐  │
          │     OUTPUT RGB VALUE           │  │
          └────────────────────────────────┘  ⎭
                           │
                           ▼
                    ┌──────────────┐
                    │     END      │
                    └──────────────┘
```

## FIG. 6

```
                    ┌─────────────┐
                    │    START    │
                    └──────┬──────┐
                           │
                           ▼
S300 ──┌────────────────────────────────────┐  ⎫
       │     RGB-etc-XYZ CONVERSION          │  ⎬ SOURCE PROFILE
       └──────────────────┬─────────────────┘  ⎭
                          │
                          ▼
S310 ──┌────────────────────────────────────┐  ⎫
       │      XYZ-sRGB CONVERSION            │  │
       └──────────────────┬─────────────────┘  │
                          │                     │
                          ▼                     │
S320 ──┌────────────────────────────────────┐  │
       │       GAMMA CORRECTION              │  │
       └──────────────────┬─────────────────┘  ⎬ PRINTER PROFILE
                          │                     │
                          ▼                     │
S330 ──┌────────────────────────────────────┐  │
       │      sRGB-RGB CONVERSION            │  │
       └──────────────────┬─────────────────┘  │
                          │                     │
                          ▼                     │
S340 ──┌────────────────────────────────────┐  │
       │       OUTPUT RGB VALUE              │  │
       └──────────────────┬─────────────────┘  ⎭
                          │
                          ▼
                    ┌─────────────┐
                    │     END     │
                    └─────────────┘
```